# EUROPEAN PATENT SPECIFICATION

(11) **EP 1 195 023 B1**
(45) Date of publication and mention of the grant of the patent: **23.07.2008**
(21) Application number: 00945969.4
(22) Date of filing: 03.07.2000
(51) Int. Cl.: H04L 12/18, G06F 17/30, H04L 29/06

(54) **METHOD FOR REMOTE DIRECTING OF WWW-BROWSER**
VERFAHREN ZUR FERNBEDIENUNG EINES WWW-BROWSERS
PROCEDE PERMETTANT DE COMMANDER UN NAVIGATEUR WEB A DISTANCE

(30) Priority: 07.07.1999 FI 991557
(43) Date of publication of application: 10.04.2002
(73) Proprietor: Curiositas Ltd Oy, 33720 Tampere (FI)
(72) Inventor: HÄLIKKÄ, Antero, FIN-33820 Tampere (FI); KOSKENSILTA, Aatu, FIN-33500 Tampere (FI)
(74) Representative: Kangasmäki, Reijo Holger
(86) International application number: PCT/FI2000/000606
(87) International publication number: WO 2001/005093

(56) References cited:
- EP-A2- 0 847 178
- WO-A1-00/33533
- WO-A1-97/37484
- WO-A1-98/13995
- WO-A1-98/36456
- WO-A2-00/45240
- US-A- 5 978 828

## Description

The content of the invention is a method by which the www-document displayed on one or more www-browsers can be changed by the controller through a window of his or her www-browser.

Simultaneous visual communication and phone contact is possible with current Internet technology. However, this requires that all parties have the necessary audio hardware as well as special software extensions to known www-browsers, such as Microsoft Internet Explorer and Netscape Navigator. With current technology it is possible to augment phone communication with presenting www-documents, usually to provide visual information. The transmission of visual information is based on active use of the www-browser, in that the controller gives www-address. The www-addresses are usually fairly long, and thus the imprecision of instructions given on phone is a disadvantage, especially due to the presence of special control characters and case sensitivity in the www-addresses (URLs). Especially in a situation in which it is desired that a phone negotiation be augmented with presentation of www-pages, the maintainer of the negotiation has to specifically instruct each party in using their respective www-browsers, making it hard for them to appreciate the contents of the presented www-documents. This makes the arrangement impractical; the disadvantage manifests itself especially when the intended audience is large, with a video projector or similar piece of equipment used to display the www-pages. Also in e-commerce there are situations in which a direct contact to the customer is required, making the phone a natural choice for communication. In such situations, say, product presentations can only be done by means of www-documents with the relevant information - this however requires constant instruction from the maintainer for the client in directing his www-browser to the desired documents.

The aforementioned situations have created a need for creating a method by which the www-browser of a listener can be controlled by the presenter without the need for the active participation of the client.

Most of known methods for similar purposes require all parties to obtain special software or equipment and install them onto their computers prior to the presentation.

On the other hand in the patent application document WO 98/13995 A1, a method sharing URLs is described. In the method the listener/participant has to activate a link that is updated and associated to a sending user in a Person table on the display in order to open a new browser window for the www-document of the new link.

Furthermore in the patent application document WO 97/37484 A1, the presentation consists of a list of images stored on the server, not shared URLs, and the process of updating the participants' browser displays is based on a multiple push from the server. That means a significant burden for the server especially in case there are numerous clients on the session. So typically two servers are used, a meeting server and a presentation server.

The intent of the invention is to avoid the disadvantages caused by the complexity of the interface for the participants and by special purpose additional software or equipment: special network, server configuration and high traffic load for the server, in addition to their cost, the additional time required to instruct clients in installing and maintaining the special purpose components and the possibility of errors in writing and communicating URLs. The invention possesses the specific advantage of all parties being able to use the method with ordinary Internet-connections and ordinary phone line utilizing pre-existing Internet and telecommunication technology.

Characteristic to the method based on the invention is defined in the independent claim.

The method according to the invention is illustrated and explicated by means of the following diagrams, in which
- Fig. 1: presents the functional portions and interrelations thereof of the remote controlling of www-browser,
- Fig. 2: presents the control window, into which previously saved URLs can be brought.

The user of the method, controller, asks his clients or conversant, henceforth listener, to direct his or her www-browser to a www-document specified by an URL pointing to a document in a server (100). The controller monitors this www-document in his own www-browser (101). The controller gives in the controller window in his or her www-browser (102) an address URL X, which is received in the server (100), and directed to a CGI-program (103) for processing. In various well known ways, it is possible to create partially or entirely dynamic www-documents. In the example the CGI-program (103) creates a www-document (104) containing the URL 1, and for it a file (105), and optionally an information frame (106). In the file (105) there is a frame (107) which forms a window for the www-document to be presented, found at URL X. Both the client's www-browser (108) and the controllers www-browser (101) upon receiving the www-document from URL 1, retrieve in the frame (107) a www-document at server (109) pointed to by the URL X the file (105). The document (104) ensures that when the URL X is changed, www-browsers (101) and (108) refresh the document respectively. This can be achieved by means of the command "RELOAD" or "REFRESH" supported by www-browsers. The document (104) can also implement a mechanism, which continuously monitors a parameter at the server (100), and a program (103) which when URL X is changed sets the parameter, which is noticed-by the mechanism, which then proceeds to refresh the document (104). A possible implementation uses the JavaScript-language element "FileUpload" or an equivalent thereof, with the parameter residing within a file in server (100). In the implementation, special care is needed to ensure that the www-browsers retrieve the actual changed documents instead of relying on their local on-disk cache. This can be done in several ways, which include using the "META"-field of html-documents to request the www-browser to update the changing parameter.

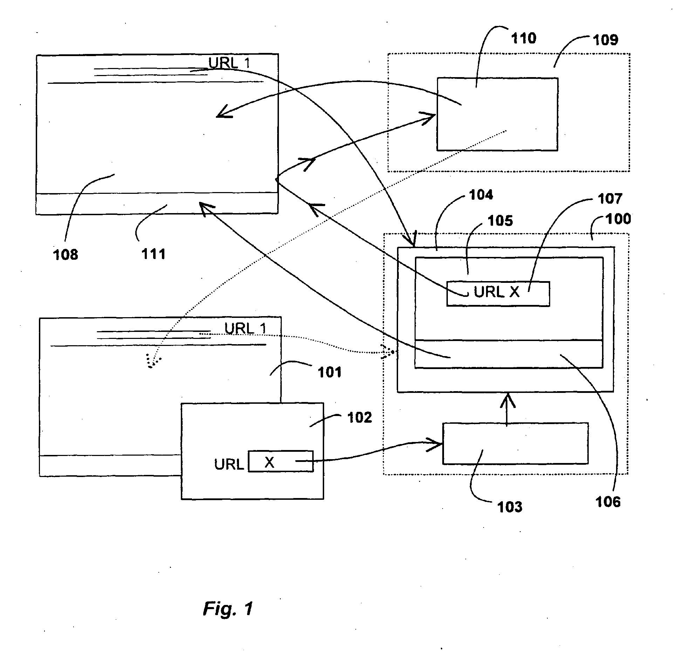

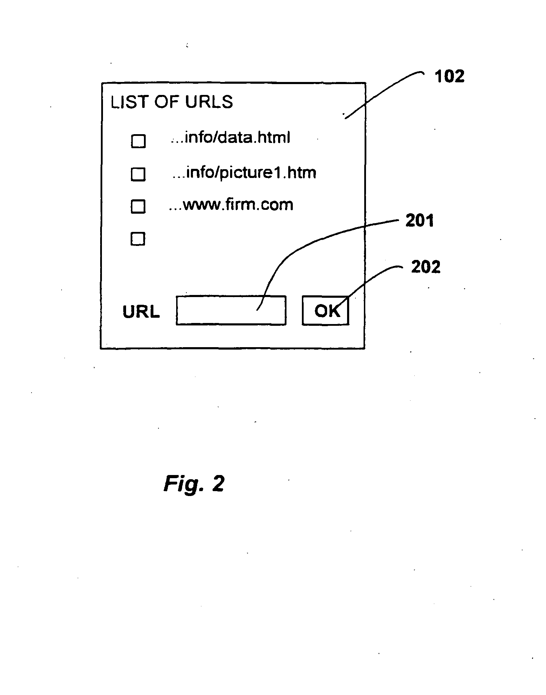

Fig. 2 illustrates one possibility of extending the control window (102), allowing previously saved URLs be brought into it. For example, the window could function in such a fashion that the URL chosen is transferred to the input field (201) of the window (102), from which it is transferred to the server (100) (Fig. 1.) by pressing the acknowledgement button (202). In similar fashion it is possible to create a control window which uses a previously created list of listeners allowed to access the www-document (104).

The www-documents and server-side programs required to implement the method as described above are well-known technology, and thus a competent person can create a working implementation based on the description above in an alternative ways in different programming languages, both interpreted and compiled, including combinations of both. These languages include, but are not restricted to, ActiveX, C, C++, Java, JavaScript, JScript, Perl, VBScript. Instructions on implementing the details of the method are plentiful and can be found among other places at the www-sites of the developers of the respective languages, and the NCSA-server of the developers of the CGI-interface.

Naturally, a competent professional in the industry can implement the method based on the invention in ways not subsumed under the above description within the restrictions set by the following claims.

## Claims

1. A method for remotely directing a www-browser, in which a controller uses his/her browser (101) to modify pages displayed on a browser (108) of one or more listeners, wherein:
the controller starts a session by entering a first address (URL1) for a dynamic www-document created by a program (103) located in a server (100) and accessible to said controller, wherein the said program (103) generates the said www-document (104) containing a file (105) that forms a frame (107) for a www-page (110) to be displayed;
the controller instructs the one or more listeners via any simultaneously used media to direct their browsers (108) to the said first address;
the controller specifies by means of his/her browser (101) a second address (x) for a www-page intended to be displayed in the frame (107) of the www-document (104);
the controller's browser (101) delivers the said second address to the server (100) and the program (103) embeds the second address in the said frame (107);
the controller's browser (101) and the browser (108) of one or more listeners access the server to retrieve and display the www-document (104) pointed by the first address, which causes the said browsers (101, 108) to retrieve the www-page (110) pointed by the second address and to display the said www-page in the frame (107); wherein the www-document (104) , upon being displayed by the controller's browser (101) and the browser (108) of the one or more listeners, makes said browsers continuously monitor a change in a parameter residing in the said server (100);
the program (103) changes the said parameter upon receiving a different second address from the controller; and
the browser (108) of the one or more listeners and the controller's browser (101) refresh the displayed document to match the changed www-document (104) at the server (100) when a change in the said parameter is detected.

2. A method as claimed in claim 1, wherein:
the controller picks the address of the www-document displayed on the listeners www-browsers (108) from a previously created list of www-addresses.

3. A method as claimed in claim 1 and 2, wherein:
the controller chooses the listeners allowed to access to the page (104) from a previously created list displayed on his/her www-bxowsex.

4. A method as claimed in claim 1 and 2, wherein:
several listeners by their browsers (108) and at least one controller by his/her browser (101) are transmitting visual information with ordinary Internet connections without additional software or equipment required by the controller and the listeners.

## Patentansprüche

1. Ein Verfahren zur Fernlenkung eines www-Browsers, bei dem ein Controller seinen Browser (101) verwendet, um Seiten zu modifizieren, die auf einem Browser (108) eines oder mehrerer Empfänger angezeigt werden, wobei:
der Controller eine Sitzung startet, indem er eine erste Adresse (URL1) für ein dynamisches www-Dokument eingibt, das von einem auf einem Server (100) befindlichen und besagtem Controller zugänglichen Programm (103) erstellt wurde, wobei das besagte Programm (103) das besagte www-Dokument (104) erzeugt, welches eine Datei (105) enthält, die einen Frame (107) für eine anzuzeigende www-Seite (110) bildet;
der Controller den einen oder mehrere Empfänger über ein beliebiges simultan genutztes Medium anleitet, ihre Browser (108) zu der besagten ersten Adresse zu lenken;
der Controller mittels seines Browsers (101) eine zweite Adresse (x) für eine www-Seite festlegt, die in dem Frame (107) des www-Dokuments (104) angezeigt werden soll;
der Browser (101) des Controllers die besagte zweite Adresse an den Server (100) liefert und das Programm (103) die zweite Adresse in den besagten Frame (107) einbettet;
der Browser (101) des Controllers und der Browser (108) eines oder mehrerer Empfänger auf den Server zugreifen, um das durch die erste Adresse gewiesene www-Dokument (104) abzurufen und anzuzeigen, was zur Folge hat, dass die besagten Browser (101, 108) die durch die zweite Adresse gewiesene www-Seite (110) abrufen und die besagte www-Seite im Frame (107) anzeigen; wobei das www-Dokument (104), während es auf dem Browser (101) des Controllers und dem Browser (108) des einen oder mehrerer Empfänger angezeigt wird, die besagten Browser dazu veranlasst, eine Veränderung eines in dem besagten Server (100) angesiedelten Parameters kontinuierlich zu überwachen;
das Programm (103) den besagten Parameter verändert, sobald es eine andere zweite Adresse vom Controller erhält; und
der Browser (108) des einen oder mehrerer Empfänger und der Browser (101) des Controllers das angezeigte Dokument aktualisieren, um mit dem veränderten www-Dokument (104) am Server (100) übereinzustimmen, wenn eine Veränderung in dem besagten Parameter festgestellt wird.

2. Ein Verfahren nach Anspruch 1, wobei:
der Controller die Adresse des auf den Browsern (108) der Empfänger angezeigten www-Dokuments einer zuvor erstellten Liste von www-Adressen entnimmt.

3. Ein Verfahren nach Anspruch 1 und 2, wobei:
der Controller die Empfänger, denen der Zugang zu der Seite (104) gestattet ist, aus einer zuvor erstellten auf seinem www-Browser angezeigten Liste auswählt.

4. Ein Verfahren nach Anspruch 1 und 2, wobei:
mehrere Empfänger über ihre Browser (108) und zumindest ein Controller über seinen Browser (101) visuelle Informationen über gewöhnliche Internetverbindungen übertragen, ohne dass vom Controller und den Empfänger zusätzliche Software oder Ausrüstungen vorausgesetzt werden.

## Revendications

1. Méthode de commande à distance d'un navigateur web, dans lequel un contrôleur utilise son navigateur (101) pour modifier des pages affichées sur un navigateur (108) d'un ou plusieurs participants, dans lequel:
le contrôleur lance une session en saisissant une première adresse (URL1) pour un document www dynamique créé par un programme (103) situé sur un serveur (100) et accessible au dit contrôleur, le dit programme (103) créant le dit document www (104) contenant un fichier (105) qui constitue une trame (107) pour une page www (110) à afficher;
le contrôleur donne des instructions à un ou plusieurs participants par un media quelconque utilisé simultanément pour qu'il(s) oriente (nt) son(ses) navigateur(s) (108) sur la dite première adresse;
le contrôleur spécifie, à l'aide de son navigateur (101), une deuxième adresse (X) pour une page www destinée à être affichée dans la trame (107) du document www (104) ;
le navigateur du contrôleur (101) fournit la dite deuxième adresse au serveur (100) et le programme (103) intègre la deuxième adresse dans la dite trame (107);
le navigateur du contrôleur (101) et le navigateur (108) d'un ou plusieurs participants accèdent au serveur pour récupérer et afficher le document www (104) indiqué par la première adresse, ce qui oblige les dits navigateurs (101, 108) à récupérer la page www (110) indiquée par la deuxième adresse et à afficher 1a dite page www dans la trame (107), où le document www (104), lorsqu'il est affiché par le navigateur du contrôleur (101) et le navigateur (108) d'un ou plusieurs participants, oblige les dits navigateurs à surveiller de manière continue un changement de paramètre résident sur le dit serveur (100) ;
le programme (103) change le dit paramètre lorsqu'il reçoit une deuxième adresse différente provenant du contrôleur et
le navigateur (108) d'un ou plusieurs participants et le navigateur du contrôleur (101) rafraîchissent le document affiché pour qu'il coïncide avec le document www changé (104) sur le serveur (100) lorsqu'un changement du dit paramètre est détecté.

2. Méthode selon revendication 1, dans laquelle le contrôleur prend l'adresse du document www affiché sur le navigateur www (108) des participants dans une liste d'adresses www créée auparavant.

3. Méthode selon revendications 1 et 2, dans laquelle le contrôleur choisit les participants autorisés à accéder à la page (104) dans une liste d'adresses www créée auparavant sur son navigateur www.

4. Méthode selon revendications 1 et 2, dans laquelle plusieurs participants, par le biais de leur navigateur (108) et au moins un contrôleur, par le biais de son explorateur (101), transmettent des informations visuelles avec des connexions Internet ordinaires sans que le contrôleur et les participants aient besoin de logiciels ou d'équipements supplémentaires.
